# EUROPÄISCHE PATENTSCHRIFT

(11) **EP 2 772 841 B1**
(45) Veröffentlichungstag und Bekanntmachung des Hinweises auf die Patenterteilung: **17.10.2018**
(21) Anmeldenummer: 13157024.4
(22) Anmeldetag: 27.02.2013
(51) Int. Cl.: G06F 8/33, G06F 8/34, G05B 19/05

(54) **Verfahren und Programm-Editor für das Erstellen und Bearbeiten eines Programms für eine industrielle Automatisierungsanordnung**
Method and program editor for creating and editing a program for an industrial automation assembly
Procédé et éditeur de programme pour la réalisation et le traitement d'un programme destiné à un système d'automatisation industriel

(43) Veröffentlichungstag der Anmeldung: 03.09.2014
(73) Patentinhaber: Siemens Aktiengesellschaft, 80333 München (DE)
(72) Erfinder: Petzoldt, Jörg, 90547 Stein (DE); Schröder, Christian, 90461 Nürnberg (DE)

(56) Entgegenhaltungen:
- US-A1- 2006 048 069
- US-A1- 2012 144 332

## Beschreibung

Die Erfindung betrifft ein Verfahren für eine graphische Benutzeroberfläche eines Programm-Editors einer industriellen Automatisierungsanordnung gemäß dem Oberbegriff des Patentanspruchs 1, und einen Programm-Editor für das Erstellen und Bearbeiten eines als Text dargestellten Programms für eine industrielle Automatisierungsanordnung gemäß dem Oberbegriff des Patentanspruchs 8.

Neben der Möglichkeit, Programme für industrielle Automatisierungsanordnungen (PLC - Programmable Logic Controller) graphisch zu erzeugen, d.h. beispielsweise durch das Verschieben von Funktionsblöcken in einem Kopplungsplan oder Funktionsplan, werden solche Programme nach wie vor häufig als Textdatei erstellt und bearbeitet. Dabei werden Programm-Editoren verwendet, deren graphische Benutzeroberfläche und Funktionalität im Wesentlichen den gebräuchlichen Textverarbeitungsprogrammen entsprechen.

Bei diesen Programm-Editoren verwenden Benutzer bekannte Manipulationsmittel (Mouse, Trackpad) neben der Tastatur als Eingabegeräte. Insbesondere wird häufig das Ziehen-und-Ablegen ("Drag-and-Drop") als Bedienprozedur verwendet. Im Unterschied zu gebräuchlichen Textverarbeitungsprogrammen werden häufig benutzte Elemente, sog. "Bibliotheks-Objekte", in einem separaten Fenster (Frame oder Bereich) dargestellt und mittels Drag-and-Drop an eine ausgewählte Stelle des Programms kopiert. Analog zu gebräuchlichen Textverarbeitungsprogrammen, bei denen beispielsweise durch Doppelklicken auf ein Zeichen ein komplettes Wort selektiert (markiert) werden kann, wobei die nachfolgende Ziehen-und-Ablegen-Bedienprozedur dieses gesamte Wort verschiebt oder kopiert, können auch bei den gebräuchlichen Programm-Editoren Programm-Objekte aus einer Bibliothek oder aus einem anderen Programmteil als komplette Zeichenfolge selektiert und entsprechend verschoben oder kopiert werden.

Nachteilig hat sich dabei jedoch erwiesen, dass zum einen die Zielposition mit dem Manipulationsmittel (Mouse-Zeiger) sehr exakt bezeichnet werden muss (also zwischen zwei Buchstaben, Zahlen oder sonstigen Zeichen), und zum anderen in dem Fall, in dem das derart manipulierte Programm-Objekt ein anderes ersetzen soll, dieses andere Objekt vorher entweder gelöscht oder zumindest markiert werden muss. Bei der Vielzahl an Bearbeitungsschritten, die zur Erstellung eines komplexen Automatisierungsprogramms regelmäßig notwendig sind, wird ständig Verbesserungsbedarf gesehen, um die entsprechenden Arbeitsabläufe ergonomischer und damit schneller oder einfacher zu gestalten. Entsprechend ergibt sich auf hieraus Aufgabe der Erfindung, die Benutzung der gebräuchlichen Programm-Editoren ergonomischer zu gestalten.

Die Druckschrift US 2006/0048069 a1 - Igeta "Display apparatus and method for displaying screen where dragging and dropping of object can be executed and program stored in computer-readable medium" zeigt eine drag-and-drop ("ziehen-und- fallenlassen")-Operation einer graphischen Benutzeroberfläche, bei der graphische Opbjekte mit einem Manipulationsmittel (Computer-Mouse) bewegt werden. Dabei wird der Zielbereich fortlaufend mittels eines graphischen Indikators angezeigt.

Es ist ein Kerngedanke der erfindungsgemäßen Lösung dieser Aufgabe, die bei Ziehen-und-Ablegen (Drag-and-Drop) selektierten Textbausteine oder Zeichenfolgen als ein logisches Programmobjekt mit einem zugeordneten Objekt-Typ zu verarbeiten, wobei die Zielposition dahingehend untersucht wird, ob sich dort bereits ein anderes Programm-Objekt befindet, welches durch das manipulierte ("gezogene") Programm-Objekt ersetzt werden kann. Dies ist insbesondere dann zu vermuten, wenn beide beteiligten Programmobjekte entweder denselben Objekt-Typ aufweisen oder zumindest einen miteinander kompatiblen Objekt-Typ (Kommando, Variable, Operator etc.). Eine vorteilhafte Ausgestaltung besteht darin, einem Benutzer bei jedem Arbeitsschritt die Wahl zu lassen, ob ein vorhandenes Programm-Objekt ersetzt werden soll, oder ob lediglich gemäß der aus dem Stand der Technik bekannten Funktion der Programm-Editoren die Zeichenfolge, die das "gezogene" Programm-Objekt repräsentiert, in den vorhandenen Text (Programm) an der Stelle der Zielposition hineinkopiert werden soll.

Die Aufgabe wird insbesondere durch ein Verfahren gemäß dem Patentanspruch 1 und durch einen Programm-Editor gemäß dem Patentanspruch 8 gelöst.

Dabei wird ein Verfahren für eine graphische Benutzeroberfläche eines Programm-Editors einer industriellen Automatisierungsanordnung vorgeschlagen, wobei ein als Zeichenfolge dargestelltes Programmobjekt durch ein Ziehen-und-Ablegen in ein als Text dargestelltes Programm eingefügt wird. Dabei wird in einem ersten Schritt ein als Zeichenfolge dargestelltes neues Programmobjekt eines Objekt-Typs mit einem Manipulationsmittel ausgewählt und zu einer Zielposition im Text des Programms bewegt, in einem zweiten Schritt wird die Zielposition dahingehend untersucht, ob an dieser Zielposition ein vorhandenes Programmobjekt desselben oder zumindest eines kompatiblen Objekt-Typs vorhanden ist, oder nicht, in einem dritten Schritt wird im Fall des Vorhandenseins eines vorhandenden Programmobjekts desselben oder eines kompatiblen Objekt-Typs dieses vorhandene Programmobjekt durch das neue Programmobjekt ersetzt, und in einem vierten Schritt wird anderenfalls die das neue Programmobjekt darstellende Zeichenfolge an der Zielposition in den Text des Programms eingefügt. Durch ein solches Verfahren ist eine ergonomische Bedienung eines Programm-Editors möglich, wobei insbesondere das vorherige, separate Markieren eines zu ersetzenden Programm-Objektes unterbleiben kann bzw. automatisch vorgenommen wird.

Die Lösung der Aufgabe sieht außerdem einen Programm-Editor für das Erstellen und Bearbeiten eines als Text dargestellten Programms für eine industriele Automatisierungsanordnung vor, wobei der Programm-Editor zur Einfügung eines als Zeichenfolge dargestellten Programmobjektes durch ein Ziehen-und-Ablegen in das als Text dargestellte Programm eingerichtet ist. Dabei ist der Programm-Editor zur Unterstützung einer Bedienprozedur eingerichtet, gemäß der in einem ersten Schritt ein als Zeichenfolge dargestelltes neues Programmobjekt eines Objekt-Typs mit einem Manipulationsmittel ausgewählt und zu einer Zielposition im Text des Programms bewegt wird, in einem zweiten Schritt die Zielposition dahingehend untersucht wird, ob an dieser Zielposition ein vorhandenes Programmobjekt desselben oder eines zumindest kompatiblen Objekt-Typs vorhanden ist, oder nicht, in einem dritten Schritt im Fall des Vorhandenseins eines vorhandenden Programmobjekts desselben oder eines kompatiblen Objekt-Typs das vorhandene Programmobjekt durch das neue Programmobjekt ersetzt wird, und in einem vierten Schritt anderenfalls die das neue Programmobjekt darstellende Zeichenfolge an der Zielposition in den Text des Programms eingefügt wird. Mittels eines solchen Programm-Editors können die im Kontext des Verfahrens diskutierten Vorteile realisiert werden.

Vorteilhafte Ausgestaltungen des Verfahrens sind in den abhängigen Patentansprüchen angegeben. Die dabei beschriebenen Merkmale und deren Vorteile gelten sinngemäß auch für den erfindungsgemäßen Programm-Editor. Die Merkmale der vorteilhaften Ausgestaltungen können sowohl einzeln, als auch in Kombination miteinander realisiert werden.

In einer vorteilhaften Ausgestaltung wird nach dem ersten Schritt einem Benutzer eine Auswahlmöglichkeit angeboten, wobei durch die Auswahlmöglichkeit auswählbar ist, ob das sich an der Zielposition des Manipulationsmittels (Maus-Zeiger) befindliche Programmobjekt durch die Bedienprozedur ersetzt werden soll, oder ob die Zeichenfolge, die das selektierte Programmobjekt bezeichnet, an die Zielposition kopiert werden soll. Dies kann beispielsweise dadurch realisiert werden, dass zunächst die zuletzt beschriebene Wirkung, nämlich das Einfügen der Zeichenfolge an die "Cursor-Position", durchgeführt werden soll, sofern der Benutzer unverzüglich die "Drop"-Aktion (Ablegen des Programmobjektes) durchführt, wobei anderenfalls jedoch nach kurzer Wartezeit (beispielsweise eine Sekunde) das sich an der Zielposition bereits befindliche Programmobjekt markiert wird, wobei ein nachfolgendes Ablegen (Drop) zum Ersetzen dieses vorhandenen Programmobjektes durch das im ersten Schritt selektierte Programmobjekt führen soll. Auf jeden Fall kann in einer vorteilhaften Ausgestaltung eine Hervorhebung (Markieren, Invertieren o.ä.) des an der Zielposition aufgefundenen Programmobjektes erfolgen. In den Fällen, in denen eine Inkompatibilität zu befürchten ist, wenn also versucht wird, ein vorhandenes Programmobjekt durch ein neues Programmobjekt eines nicht-passenden Objekttyps zu ersetzen, kann eine Ausgabe eines Warnsignals, eine Fehlermeldung oder dergleichen erfolgen, alternativ kann die Ausführung des Vorgangs auch automatisch unterbrochen werden.

Eine schnelle Bearbeitung eines Programms kann erfolgen, wenn das neue Programmobjekt aus einer Anzahl verfügbarer Programmobjekte, beispielsweise aus einer Bibliothek oder aus einem als Vorlage benutzen, anderen Programm, ausgewählt und durch die beschriebene Ziehen-und-Ablegen-Bedienprozedur in das in Bearbeitung befindliche Programm kopiert wird. Sofern kein Kopieren, sondern ein tatsächliches Bewegen eines Programmobjektes gewünscht ist, kann zwischen diesen beiden Betriebsarten durch gebräuchliche Bedienprozeduren unterschieden werden, beispielsweise indem beim Kopieren eine Steuerungstaste oder dergleichen an einer Computer-Tastatur gedrückt wird, und bei einem Verschieben nicht, oder umgekehrt.

In einer vorteilhaften Ausgestaltung wird ein aktueller Betriebsmodus des Programm-Editors berücksichtigt, wobei in dem dritten Schritt nur vorhandene Programmelemente eines solchen Objekt-Typs ersetzbar sind, die zur Bearbeitung in dem aktuellen Betriebsmodus vorgesehen sind. Dies bietet sich beispielsweise an, wenn Programmobjekte aus einem älteren Programm (Vorlage) in ein neueres Programm übernommen werden sollen. Befindet sich der Programm-Editor beispielsweise in der Betriebsart "parametrieren", können in dem älteren Programm (Vorlage) nur Parameter (Variablen, Konstanten, Zahlen) selektiert und mittels "Drag-and-Drop" an eine passende Stelle des Ziel-Programms bewegt werden, wobei eine solche passende Stelle insbesondere ein Platzhalter für Parameter sein kann. Entsprechend ist es auch möglich, den "Fangbereich", also die erlaubte Wegstrecke zwischen der tatsächlichen Zielposition eines Maus-Zeigers und einer möglichen ZielPosition, entsprechend groß auszugestalten, wodurch sich ein flüssigeres Arbeiten ergibt.

In einer vorteilhaften Ausgestaltung kann der beschriebene Betriebsmodus auch automatisch anhand desjenigen Objekt-Typs ermittelt werden, den das selektierte Programmobjekt zum Beginn der Bedienprozedur aufweist. Gegebenenfalls kann auch halbautomatisch die Auswahl des Betriebsmodus dadurch geschehen, dass eine Steuerungstaste betätigt wird, während ein beliebiges Programmobjekt des gewünschten Objekt-Typs selektiert wird, wonach der Betriebsmodus sich entsprechend des gewählten Objekt-Typs einrichtet. In einer weiteren, vorteilhaften Ausgestaltung bestimmt sich der Objekt-Typ eines selektierten, ausgewählten Programmobjektes aus dem Objekt-Typ, der der entsprechenden Programm-Bibliothek zugeordnet ist, d.h., dass beispielsweise bei der Auswahl eines Programmobjektes aus einer Befehls-Bibliothek der entsprechende Objekt-Typ zugeordnet wird, während bei einer Selektion einer Variablen aus einer Variablen-Listen klar ist, dass ein zur Parametrierung von Befehlen und dergleichen geeigneter Objekt-Typ der ausgewählten Zeichenfolge zugeordnet ist.

Ausführungsbeispiele des erfindungsgemäßen Verfahrens werden nachfolgend anhand der Zeichnungen erläutert. Sie dienen gleichzeitig der Erläuterung von Ausführungsbeispielen eines erfindungsgemäßen Programm-Editors. Dabei zeigen:
- Figur 1: eine Ziehen-und-Ablegen-Bedienprozedur gemäß dem Stand der Technik,
- Figuren 2, 3: das Kopieren eines Programmobjektes nach dem erfindungsgemäßen Verfahren,
- Figur 4: eine weitere Bedienprozedur nach dem Stand der Technik und
- Figur 5, 6: die weitere Bedienprozedur nach dem erfindungsgemäßen Verfahren.

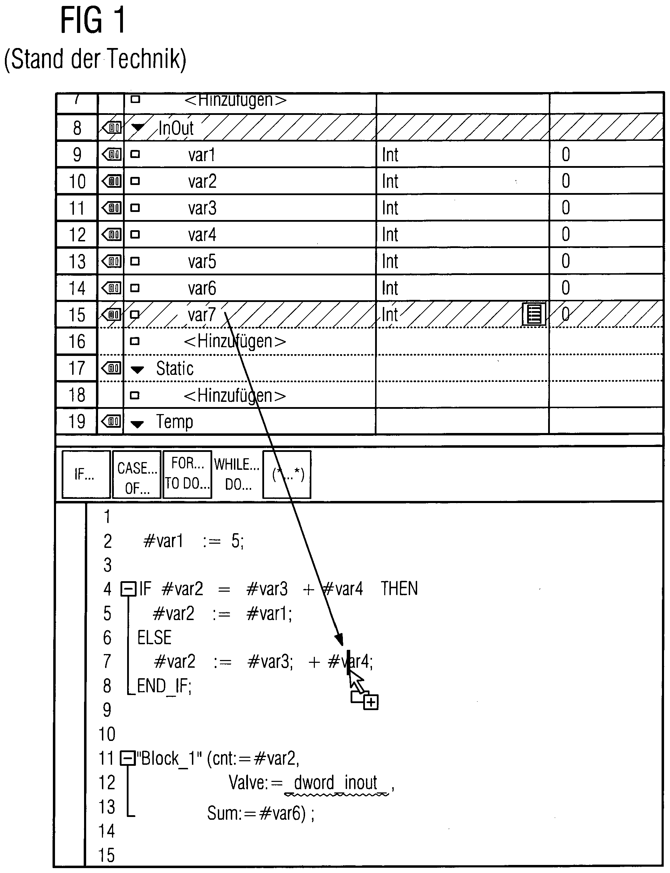

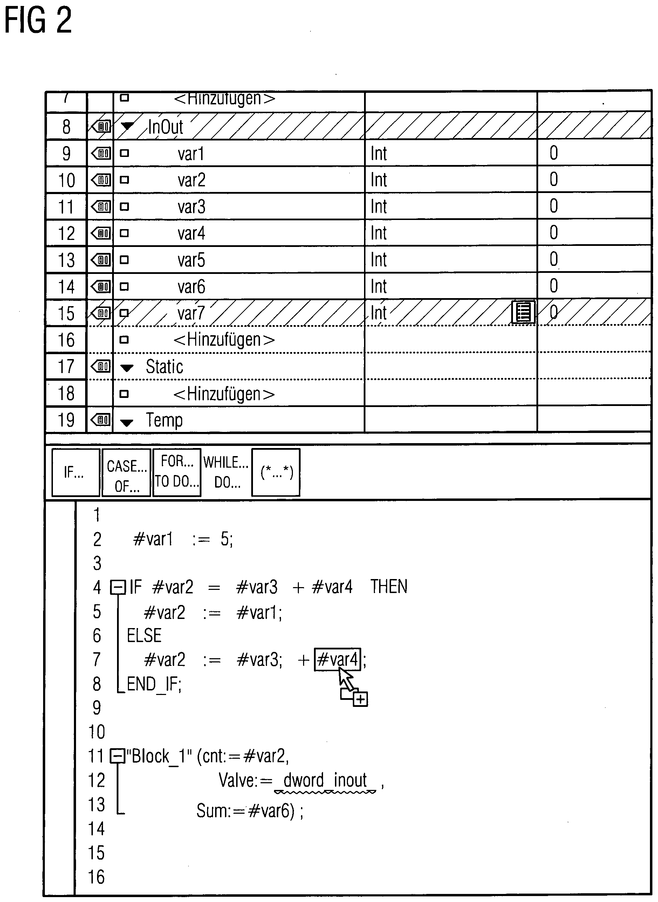

In der Figur 1 ist gemäß dem Stand der Technik ein Teil einer Benutzeroberfläche eines gebräuchlichen Programm-Editors dargestellt. Dabei ist im oberen Teil der Figur eine Variablen-Liste mit Variablen var1, ..., var7 als vom Typ "Integer" zu sehen, wobei eine der Variablen in einen Ausschnitt eines im untere Teil der Figur dargestellten Programms (Automatisierungsprogramm) eingefügt werden soll; dieser Vorgang ist durch einen Pfeil dargestellt, der eine bekannte Drag-and-Drop (Ziehen-und-Ablegen)-Bedienprozedur symbolisiert. Für die nachfolgend beschriebenen Figuren 2 bis 6 gilt dieselbe Ausgangskonfiguration, also dieselbe Variablen-Liste als "Bibliothek", im oberen Teil der jeweiligen Figur, und dasselbe Stück Programmcode im unteren Teil der jeweiligen Figur.

Wie erwähnt, stellt die Figur 1 den Stand der Technik dar, was darin zu sehen ist, dass die selektierte Zeichenfolge "var7" mittels der Bedienprozedur in den Text des Programms gezogen wird, und zwar speziell mitten in die Zeichenfolge "#var4". Durch das Symbol "+" an der Einfügemarke wird symbolisiert, dass die Zeichenfolge "var7" an genau die markierte Stelle kopiert werden soll, was im Stand der Technik (nicht dargestellt) dazu führen würde, dass die resultierende Zeichenfolge "#vvar7ar4" lauten würde, was jedoch in der Syntax der Programmiersprache eine unsinnige Anweisung wäre.

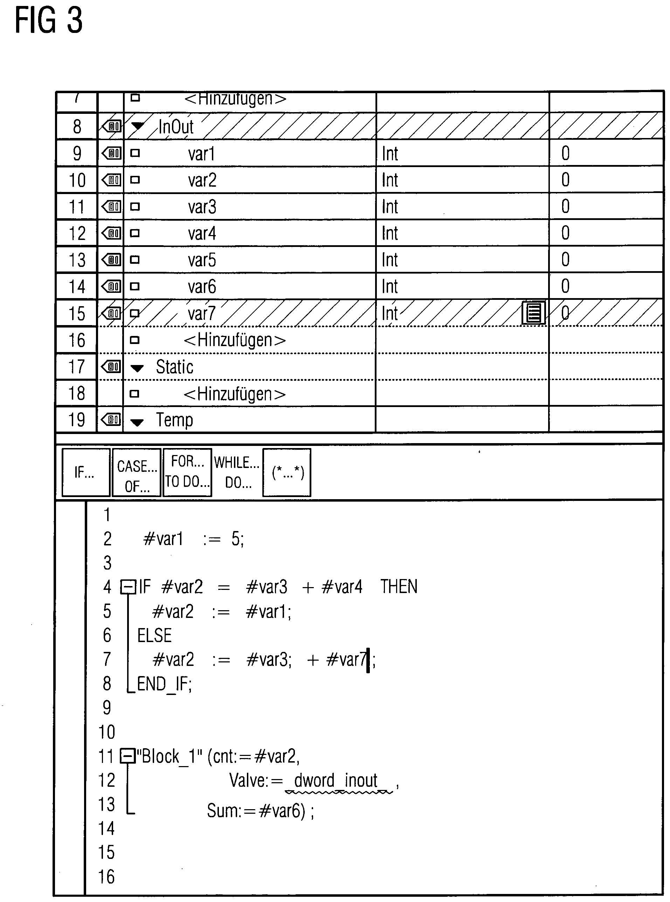

An der Figur 2 wird die erfindungsgemäße Wirkungsweise derselben Bedienprozedur, die zuvor anhand der Figur 1 diskutiert wurde, dargestellt. Der verwendete Programm-Editor hat dabei festgestellt, dass an der Einfügemarke innerhalb der Zeichenfolge "#var4" ein Programmobjekt vom Typ "Variable des Typs Integer" vorhanden ist. Das markierte und verschobene Objekt "var7" ist von demselben Typ, so dass die Zeichenfolge "var4" entsprechend automatisch markiert wird (in der Figur durch einen quadratischen Rahmen dargestellt), wobei das derart automatisch markierte, vorhandene Programm-Objekt "#var4" im nächsten Schritt durch das bewegte Programm-Objekt "var7" ersetzt wird. Entsprechend der Markierung durch das Zeichen "#", welches das vorhandene Programm-Objekt "var4" als eine Instanz einer Variablen kennzeichnet, wird auch das neu eingefügte Programm-Objekt als Instanz einer Variablen gekennzeichnet, also mit dem Zeichen "#" gekennzeichnet. Das Resultat ist in Figur 3 dargestellt.

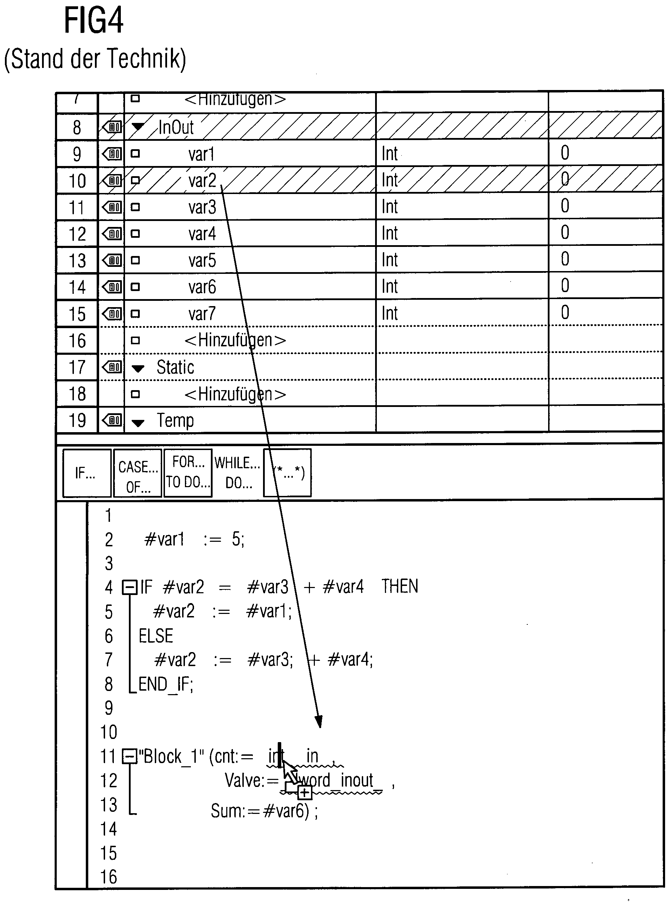

Im zuvor diskutierten Beispiel ist ein vorhandenes Programm-Objekt durch ein solches, neues von demselben Objekt-Typ (nämlich Variable des Typs Integer) ersetzt worden. Es können jedoch auch zueinander kompatible Objekt-Typen ersetzt werden, beispielsweise kann in einer Fließkomma-Operation, die Operanden des Typs "real" verwendet, eine vorhandene Variable des Typs "real" durch eine neue Variable des Typs "Integer" ersetzt werden. Dies bedeutet, dass der erfindungsgemäße Programm-Editor den Kontext des zu ersetzenden Programm-Objektes auswertet, in diesem Fall also die Art der Rechenoperation (hier: Fließkomma-Arithmetik). In der Figur 4 ist der bereits aus der Figur 1 bekannte Ausschnitt der Benutzeroberfläche gezeigt, wobei jedoch im Unterschied zu der Darstellung in der Figur 1 in diesem weiteren Ausführungsbeispiel aus dem "Bibliotheks-Teil" im oberen Teil der Figur die Variable "var2" in die Zuweisung "cnt:= int_in" gezogen wird. Gemäß dem Stand der Technik würde nun die Zeichenfolge "var2" in die bestehende Zeichenfolge hineinkopiert werden, so dass an dieser Stelle eine resultierende Zeichenfolge "cnt:= invar2t_in" resultieren würde, was eine syntaktisch falsche Anweisung darstellen würde.

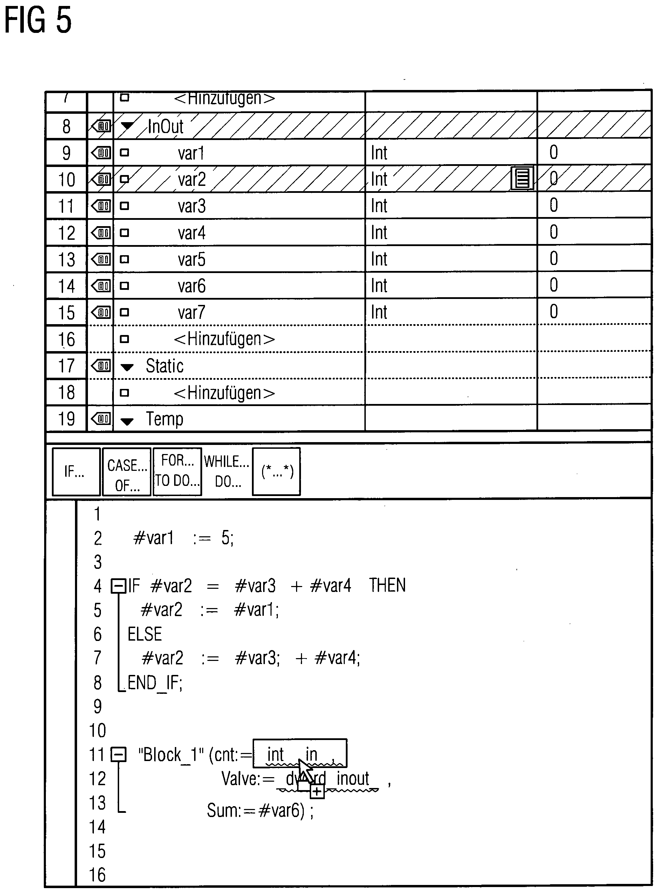

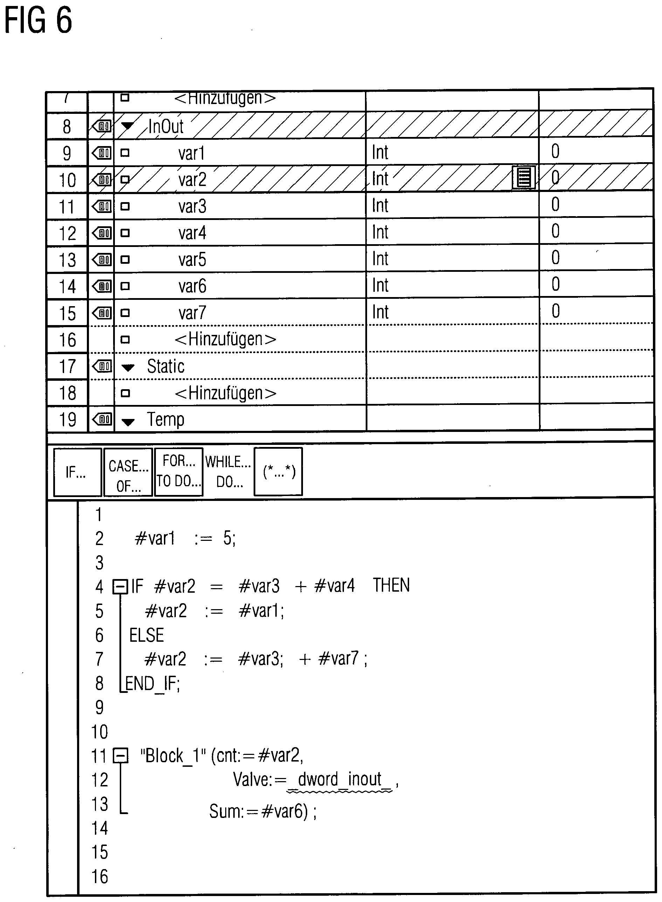

In der Figur 5 ist als erfindungsgemäßes Resultat der Bedienaktion der Zustand zu sehen, dass die Zeichenfolge "int_in" automatisch markiert worden ist, weil diese Zeichenfolge als Platzhalter ("Eingangsvariable des Typs Integer") für die Parametrierung der Variablen "cnt" erkannt wurde, wobei das Programm-Objekt "var2" als Programm-Objekt eines geeigneten Objekt-Typs für die Parametrierung erkannt wurde. Entsprechend wird der automatisch markierte Platzhalter vollständig durch eine Instanz der selektierten und bewegten Variablen "var2" ersetzt, was in der Figur 6 an der entsprechenden Zielposition durch die Zeichenfolge "#var2" erkennbar ist.

Durch das vorstehend beschriebene Verfahren und durch den damit auch definierten Programm-Editor werden bei Drag-and-Drop-Operationen Textbausteine als Objekte verstanden. Durch die Bedienprozedur des Ziehen-und-Ablegens von Objekten wird nicht der reine Text (beispielsweise Bezeichner oder Name des Objekts) eingesetzt, sondern das jeweilige Objekt selbst. Dabei wird der Kontext im Programm-Editor beachtet. Zieht der Anwender ein Objekt auf ein vorhandenes Objekt, wird dieses komplett textuell ersetzt. Dennoch ist es möglich, dass ein Benutzer auch weiterhin die Vorgehensweise aus dem Stand der Technik benutzt, in dem das System beispielsweise zuerst das Einfügen von Text (wie gewohnt) anbietet, aber nach kurzer Verzögerung dann die Kontext-sensitive Erkennung des Ziel-Programm-Objektes vornimmt. So wird also bei der Ziehen-und-Ablegen-Bedienprozedur nach einer kurzen Verzögerung aus einem Indikator (z.B. ein "Mouse-Zeiger") beispielsweise ein "Rahmen" aufgezogen, der das unterliegende, vorhandene Programm-Objekt umfasst. Für den Anwender bzw. Programmierer ist dies ein Hinweis, dass nun Variablen in seinem Programm oder andere Programm-Objekte komplett ersetzt werden. Dadurch ist ein effizienteres Bedienen einer Projektierungssoftware oder allgemein eines Programm-Editors möglich.

## Patentansprüche

1. Verfahren für eine graphische Benutzeroberfläche eines Programm-Editors einer industriellen Automatisierungsanordnung,
wobei ein als Zeichenfolge dargestelltes Programmobjekt durch ein Ziehen-und-Ablegen in ein als Text dargestelltes Programm eingefügt wird,
**dadurch gekennzeichnet, dass**
- in einem ersten Schritt ein als Zeichenfolge dargestelltes neues Programmobjekt eines Objekt-Typs mit einem Manipulationsmittel ausgewählt und zu einer Zielposition im Text des Programms bewegt wird,
- in einem zweiten Schritt die Zielposition dahingehend untersucht wird, ob an dieser Zielposition ein vorhandenes Programmobjekt desselben oder eines kompatiblen Objekt-Typs vorhanden ist, oder nicht, wobei der Kontext des zu ersetzenden Programmobjektes ausgewertet wird,
wobei ein Programmobjekt eines kompatiblen Objekt-Typs ein solches ist, welches durch das neue Programmobjekt ersetzt werden kann,
- in einem dritten Schritt im Fall des Vorhandenseins eines vorhandenden Programmobjekts desselben oder eines kompatiblen Objekt-Typs dieses vorhandene Programmobjekt durch das neue Programmobjekt ersetzt wird, und
- in einem vierten Schritt anderenfalls die das neue Programmobjekt darstellende Zeichenfolge an der Zielposition in den Text des Programms eingefügt wird.

2. Verfahren nach Patentanspruch 1,
**dadurch gekennzeichnet,**
**dass** nach dem ersten Schritt einem Benutzer eine Auswahlmöglichkeit angeboten wird, wobei durch die Auswahlwahlmöglichkeit auswählbar ist, ob der dritte Schritt ausgeführt werden soll, oder ob ein Einfügen gemäß des vierten Schrittes ausgeführt werden soll.

3. Verfahren nach einem der vorhergehenden Patentansprüche,
**dadurch gekennzeichnet,**
**dass** nach dem zweiten Schritt das zu ersetzende vorhandene Programmobjekt auf der Benutzeroberfläche mittels einer Markierung hervorgehoben wird.

4. Verfahren nach einem der vorhergehenden Patentansprüche,
**dadurch gekennzeichnet,**
**dass** das neue Programmobjekt aus einer Anzahl mittels einer Bibliothek dargestellter Programmobjekte ausgewählt und durch Ziehen-und-Ablegen in das Programm kopiert wird.

5. Verfahren nach einem der vorhergehenden Patentansprüche,
**dadurch gekennzeichnet,**
**dass** ein aktueller Betriebsmodus des Programm-Editors berücksichtigt wird, wobei in dem dritten Schritt nur vorhandene Programmelemente eines solchen Objekt-Typs ersetzbar sind, die zur Bearbeitung in dem aktuellen Betriebsmodus vorgesehen sind.

6. Verfahren nach Patentanspruch 5,
**dadurch gekennzeichnet,**
**dass** der Betriebsmodus anhand des Objekt-Typs des im ersten Schritt ausgewählten Programmobjektes automatisch erkannt wird.

7. Verfahren nach Patentanspruch 5 oder 6,
**dadurch gekennzeichnet,**
**dass** zumindest zwischen einem Betriebsmodus für das Erweitern und einem Betriebsmodus für das Parametrieren des Programms unterschieden wird.

8. Programm-Editor für das Erstellen und Bearbeiten eines als Text dargestellten Programms für eine industrielle Automatisierungsanordnung,
wobei der Programm-Editor zur Einfügung eines als Zeichenfolge dargestellten Programmobjektes durch ein Ziehen - und - Ablegen in das als Text dargestellte Programm eingerichtet ist,
**dadurch gekennzeichnet,**
**dass** der Programm-Editor zur Unterstützung einer Bedienprozedur eingerichtet ist, gemäß der
- in einem ersten Schritt ein als Zeichenfolge dargestelltes neues Programmobjekt eines Objekt-Typs mit einem Manipulationsmittel ausgewählt und zu einer Zielposition im Text des Programms bewegt wird,
- in einem zweiten Schritt die Zielposition dahingehend untersucht wird, ob an dieser Zielposition ein vorhandenes Programmobjekt desselben oder eines kompatiblen Objekt-Typs vorhanden ist, oder nicht, wobei der Kontext des zu ersetzenden Programmobjektes ausgewertet wird,
wobei ein Programmobjekt eines identischen oder eines kompatiblen Objekt-Typs ein solches ist, welches durch das neue Programmobjekt ersetzt werden kann,
- in einem dritten Schritt im Fall des Vorhandenseins eines vorhandenden Programmobjekts desselben oder eines kompatiblen Objekt-Typs das vorhandene Programmobjekt durch das neue Programmobjekt ersetzt wird, und
- in einem vierten Schritt anderenfalls die das neue Programmobjekt darstellende Zeichenfolge an der Zielposition in den Text des Programms eingefügt wird.

## Claims

1. Method for a graphical user interface of a program editor of an industrial automation arrangement,
a program object presented as a character string being inserted into a program presented as text using drag-and-drop,
**characterized in that**
- in a first step, a new program object of an object type, which is presented as a character string, is selected using a manipulation means and is moved to a target position in the text of the program,
- in a second step, the target position is examined in order to determine whether or not an existing program object of the same object type or of a compatible object type is present at this target position,
the context of the program object to be replaced being evaluated,
a program object of a compatible object type being a program object which can be replaced with the new program object,
- in a third step, if an existing program object of the same object type or of a compatible object type is present, this existing program object is replaced with the new program object, and
- in a fourth step, the character string representing the new program object is otherwise inserted into the text of the program at the target position.

2. Method according to Patent Claim 1,
**characterized in that**
after the first step, a user is offered a selection possibility, the selection possibility being able to be used to select whether the third step is intended to be carried out or whether insertion according to the fourth step is intended to be carried out.

3. Method according to one of the preceding patent claims, **characterized in that**
after the second step, the existing program object to be replaced is highlighted on the user interface using a mark.

4. Method according to one of the preceding patent claims, **characterized in that**
the new program object is selected from a number of program objects presented using a library and is copied into the program using drag-and-drop.

5. Method according to one of the preceding patent claims, **characterized in that**
a current operating mode of the program editor is taken into account, only existing program elements of such an object type which are intended to be processed in the current operating mode being able to be replaced in the third step.

6. Method according to Patent Claim 5,
**characterized in that**
the operating mode is automatically detected using the object type of the program object selected in the first step.

7. Method according to Patent Claim 5 or 6,
**characterized in that**
a distinction is made at least between an operating mode for expanding the program and an operating mode for parameterizing the program.

8. Program editor for creating and processing a program presented as text for an industrial automation arrangement,
the program editor being set up to insert a program object presented as a character string into the program presented as text using drag-and-drop,
**characterized in that**
the program editor is set up to support an operating procedure according to which
- in a first step, a new program object of an object type, which is presented as a character string, is selected using a manipulation means and is moved to a target position in the text of the program,
- in a second step, the target position is examined in order to determine whether or not an existing program object of the same object type or of a compatible object type is present at this target position,
the context of the program object to be replaced being evaluated,
a program object of an identical or compatible object type being a program object which can be replaced with the new program object,
- in a third step, if an existing program object of the same object type or of a compatible object type is present, the existing program object is replaced with the new program object, and
- in a fourth step, the character string representing the new program object is otherwise inserted into the text of the program at the target position.

## Revendications

1. Procédé pour une surface graphique d'utilisateur d'un éditeur de programme d'un système d'automatisation industriel, dans lequel on insère un objet de programme représenté sous la forme d'une suite de caractères par un glissement et dépôt dans un programme représenté sous la forme d'un texte, **caractérisé en ce que**
- dans un premier stade, on choisit, par un moyen de manipulation, un nouvel objet de programme, représenté sous la forme d'une suite de caractères, d'un type d'objet et on le met à une position cible dans le texte du programme,
- dans un deuxième stade, on examine la position cible sur le point de savoir s'il y a, en cette position cible, un objet de programme présent du même type d'objet ou d'un type d'objet compatible ou sinon on exploite le contexte de l'objet de programme à remplacer,
dans lequel un objet de programme d'un type d'objet compatible est un objet de programme, qui peut être remplacé par le nouvel objet de programme,
- dans un troisième stade, dans le cas de la présence d'un objet de programme présent du même type d'objet ou d'un type d'objet compatible, on remplace cet objet de programme présent par le nouvel objet de programme et
- dans un quatrième stade, sinon on ajoute la suite de caractères représentant le nouvel objet de programme en la position cible dans le texte du programme.

2. Procédé suivant la revendication 1,
**caractérisé**
**en ce que**, après le premier stade, on offre à un utilisateur une possibilité de choix, dans lequel, par la possibilité de choix, il peut être choisi si l'on doit exécuter le troisième stade ou si l'on doit exécuter une insertion suivant le quatrième stade.

3. Procédé suivant l'une des revendications précédentes, **caractérisé**
**en ce que**, après le deuxième stade, on met en évidence l'objet de programme présent à remplacer sur la surface d'utilisateur au moyen d'un repérage.

4. Procédé suivant l'une des revendications précédentes, **caractérisé**
**en ce que** l'on choisit le nouvel objet de programme parmi un certain nombre d'objets de programme représentés au moyen d'une bibliothèque et on le copie dans le programme par glissement et dépôt.

5. Procédé suivant l'une des revendications précédentes, **caractérisé**
**en ce que** l'on prend en compte un mode de fonctionnement présent de l'éditeur de programme, dans lequel, dans le troisième stade, seuls peuvent être remplacés des éléments de programme présents d'un type d'objet, qui sont prévus pour le traitement dans le mode de fonctionnement présent.

6. Procédé suivant la revendication 5,
**caractérisé**
**en ce que** l'on détecte automatiquement le mode de fonctionnement à l'aide du type d'objet de l'objet de programme choisi dans le premier stade.

7. Procédé suivant la revendication 5 ou 6,
**caractérisé**
**en ce que** l'on distingue au moins entre un mode de fonctionnement pour l'extension et un mode de fonctionnement pour le paramétrage du programme.

8. Editeur de programme pour la création et le traitement d'un programme représenté sous la forme d'un texte pour un système d'automatisation industriel,
dans lequel l'éditeur de programme est conçu pour l'insertion d'un objet de programme représenté sous la forme d'une suite de caractères par un glissement et dépôt dans le programme représenté sous la forme d'un texte,
**caractérisé**
**en ce que** l'éditeur de programme est conçu pour assister une procédure de service, suivant laquelle
- dans un premier stade, on choisit, par un moyen de manipulation, un nouvel objet de programme, représenté sous la forme d'une suite de caractères, d'un type d'objet et on le met à une position cible dans le texte du programme,
- dans un deuxième stade, on examine la position cible sur le point de savoir s'il y a, en cette position cible, un objet de programme présent du même type d'objet ou d'un type d'objet compatible ou sinon on exploite le contexte de l'objet de programme à remplacer,
dans lequel un objet de programme d'un type d'objet compatible est un objet de programme, qui peut être remplacé par le nouvel objet de programme,
- dans un troisième stade, dans le cas de la présence d'un objet de programme présent du même type d'objet ou d'un type d'objet compatible, on remplace cet objet de programme présent par le nouvel objet de programme et
- dans un quatrième stade, sinon on ajoute la suite de caractères représentant le nouvel objet de programme en la position cible dans le texte du programme.
